**Europäisches Patentamt**

**European Patent Office**

**Office européen des brevets**

(19)

(11) Veröffentlichungsnummer: **0 656 700 A1**

## (12) EUROPÄISCHE PATENTANMELDUNG

(21) Anmeldenummer: **94118819.5**

(22) Anmeldetag: **30.11.94**

(51) Int. Cl.6: **H04B 10/12**, H04B 10/04, H04L 5/04

(30) Priorität: **04.12.93 DE 4341408**

(43) Veröffentlichungstag der Anmeldung:
**07.06.95 Patentblatt 95/23**

(84) Benannte Vertragsstaaten:
**CH DE ES FR GB IT LI SE**

(71) Anmelder: **Alcatel SEL Aktiengesellschaft**
**Lorenzstrasse 10**
**D-70435 Stuttgart (DE)**

(72) Erfinder: **Wedding, Berthold, Dr.**
**Hebbelstrasse 8**
**D-70825 Korntal-Münchingen (DE)**

(74) Vertreter: **Kugler, Hermann, Dipl.-Phys. et al**
**Alcatel SEL AG**
**Patent- und Lizenzwesen**
**Postfach 30 09 29**
**D-70449 Stuttgart (DE)**

(54) **Optisches system zur Übertragung eines Mehrstufensignals.**

(57) Bei der optischen Übertragung von Digitalsignalen besteht der Wunsch, die Übertragungsgeschwindigkeit dieser Signale, d. h. die Bitfolgefrequenz, auf z. B. 40 Gbit/s und mehr zu erhöhen.

Bei diesen Systemen ist eine obere Grenze der Bitfolgefrequenz erkennbar, oberhalb derer direkt modulierte Laser und deren Ansteuerelektronik, wie sie bisher zum Einsatz kommen, nicht mehr verwendet werden können.

Es ist ein optisches Übertragungsystem angegeben, in dessen optischem Sender (1) ein elektrisches Mehrstufensignal (V), das aus zwei elektrischen Digitalsignalen $(V_1, V_2)$ zusammengesetzt ist, einen Halbleiterlaser (4) moduliert, so daß ein optisches Mehrstufensignal (V) optisch übertragen wird. Im optischen Empfänger (2) befindet sich eine Entscheider-Schaltung (7), die die Digitalsignale $(V_1, V_2)$ wieder zurückgewinnt.

FIG.1

EP 0 656 700 A1

Die Erfindung betrifft ein optisches Übertragungssystem nach dem Oberbegriff des Anspruchs 1. Außerdem betrifft die Erfindung einen optischen Sender mit einem elektrisch-optisch Wandler nach dem Oberbegriff des Anspruchs 2. Schließlich betrifft die Erfindung eine Entscheider-Schaltung zur Verwendung in dem erfindungsgemäßen Übertragungssystem. Sie ist Gegenstand der Ansprüche 4 bis 6.

Optische Übertragungssysteme mit den im Oberbegriff des Anspruchs 1 angeführten Merkmalen und die darin eingesetzten optischen Sender sind hinreichend bekannt, z. B. aus: EP-A2-554 736. Dort ist auf der Sendeseite ein elektrisch-optisch Wandler gezeigt, der ein von einem elektrischen Digitalsignal frequenzmoduliertes optisches Signal aussendet. Die Übertragung erfolgt über einen Lichtwellenleiter zu einem optischen Empfänger, der einen optisch-elektrisch Wandler und einen Entscheider hat. Mit dem Entscheider wird das Digitalsignal zurückgewonnen.

Bei der optischen Übertragung von Digitalsignalen besteht der Wunsch, die Übertragungsgeschwindigkeit dieser Signale zu erhöhen, d.h. die Bitfolgefrequenz beispielsweise auf 40 Gbit/s zu erhöhen.

Aus der Literatur sind Systeme bekannt, in denen Signale mit einer Bitfolgefrequenz von 10 Gbit/s übertragbar sind. Aus B. Wedding et al, "10 Gbit/s To 260 000 Subscribers Using Optical Amplifier Distribution Network", Contribution für ICC/Supercom '92, Optical Communications 300 Level Session "Impact of Optical Amplifiers on Network Architectures" ist beispielsweise bekannt, für diese Bitfolgefrequenz einen Laser (high-speed multiquantum well DFB-Laser, MQW DFB-Laser) direkt zu modulieren. Direkte Modulation bedeutet, daß der Injektionsstrom des Lasers in Abhängigkeit des zu übertragenden Signals variiert wird. Dadurch ist eine Intensitätsoder Frequenzmodulation möglich. Für diese Anwendung, 10 Gbit/s-Übertragung, muß der DFB-Laser optimiert werden, um unerwünschte Modulationseigenschaften zu reduzieren. Zu diesen unerwünschten Eigenschaften gehören z.B. der Chirp-Effekt und parasitäre Impedanzen der Laser. Unter dem Chirp-Effekt versteht man eine Frequenzinstabilität, die bei der Modulation auftritt.

Aus diesen Gründen ist eine obere Grenze der Bitfolgefrequenz erkennbar, oberhalb derer direkt modulierte Laser, wie sie bisher zum Einsatz kommen, nicht mehr verwendet werden können. Auch für die Ansteuerelektronik des Lasers besteht eine obere Grenze.

Der Erfindung liegt die Aufgabe zugrunde, ein optisches Übertragungssystem anzugeben, in dem Signale mit einer hohen Bitfolgefrequenz übertragen werden können. Diese Aufgabe ist wie in Anspruch 1 angegeben gelöst.

Außerdem liegt der Erfindung die Aufgabe zugrunde, einen optischen Sender für ein solches System anzugeben. Diese Aufgabe ist wie in Anspruch 2 angegeben gelöst. Weiterbildungen der Erfindung sind in den Unteransprüchen angegeben.

Ein Vorteil der Erfindung ist, daß die Erhöhung der Bitfolgefrequenz in diesem optischen Übertragungssystem mit unveränderten Lasern und einer unveränderten Ansteuerelektronik möglich ist.

Die Erfindung wird nun anhand der Figuren durch Beispiele näher erläutert. Es zeigen:

Fig. 1 ein erfindungsgemäßes optisches Übertragungssystem mit einem optischen Sender,

Fig. 2 ein Beispiel zur Bildung eines Mehrstufensignals,

Fig. 3 ein erstes Ausführungsbeispiel einer Entscheider-Schaltung,

Fig. 4 ein zweites Ausführungsbeispiel einer Entscheider-Schaltung.

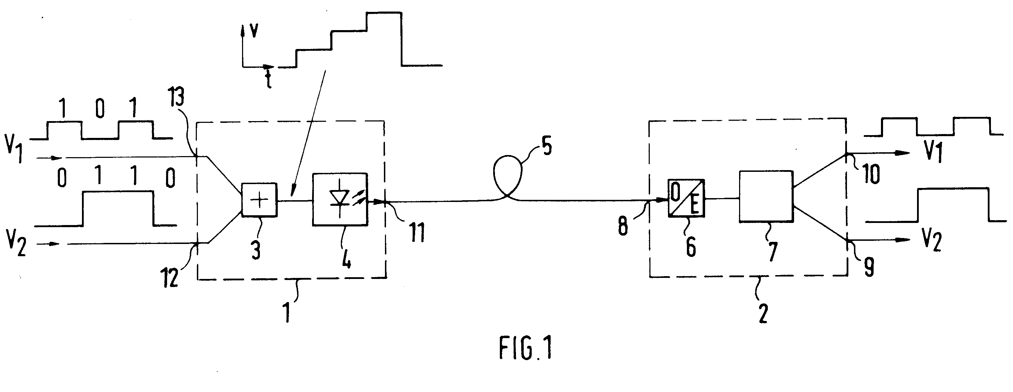

Ein optisches Übertragungssystem ist in Fig. 1 gezeigt. Es hat einen optischen Sender 1, eine Übertragungsstrecke mit einem Lichtwellenleiter 5 und einen optischen Empfänger 2.

Der optische Sender hat einen Leistungsaddierer 3, einen elektrisch-optisch Wandler 4, der vorzugsweise ein Halbleiterlaser ist, zwei Eingänge 12, 13 und einen Ausgang 11. Über den Eingang 13 wird dem Leistungsaddierer 3 ein erstes elektrisches Digitalsignal $V_1$ und über den Eingang 12 ein zweites elektrisches Digitalsignal $V_2$ zugeführt. Der Leistungsaddierer 3 ist mit dem Halbleiterlaser 4 verbunden. Dessen optisches Signal wird an dem Ausgang 11 in den Lichtwellenleiter 5 eingekoppelt.

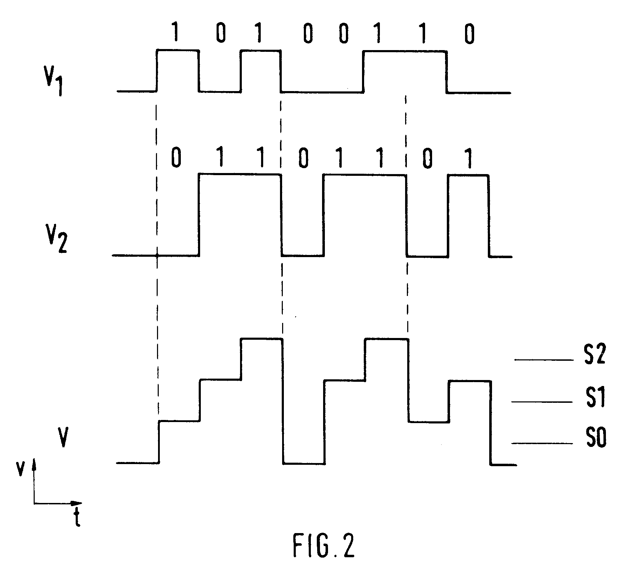

Der Leistungsaddierer 3 bildet aus den Digitalsignalen $V_1$, $V_2$ durch bitweise Addition ein elektrisches Mehrstufensignal V, dessen Bildung in Fig. 2 noch genauer erläutert wird.

Der Halbleiterlaser wird hier durch das elektrische Mehrstufensignal V direkt moduliert. Es ist auch möglich, daß anstatt des direkt modulierten Lasers eine Einrichtung vorhanden ist, in der von einem Halbleiterlaser emittiertes kontinuierliches Licht extern durch einen optischen Modulator moduliert wird. Das elektrische Mehrstufensignal V wird in diesem Fall dem optischen Modulator zugeführt.

Das Mehrstufensignal V moduliert das vom elektrisch-optisch Wandler 4 emittierte Licht in seiner Frequenz oder Amplitude. Besonders vorteilhaft ist dieses Mehrstufensignal V in einem Übertragungssystem, in dem Signale frequenzmoduliert übertragen werden. Ein solches System ist aus der oben erwähnten EP-A2-544 736 bekannt.

Der optische Empfänger 2 hat einen optisch-elektrisch Wandler 6, der z.B. eine PIN-Photodiode ist, eine Entscheider-Schaltung 7, einen optischen Eingang 8 und zwei elektrische Ausgänge 9, 10. Der elektrische Ausgang der Photodiode 6 ist über einen oder mehrere nicht gezeigte Verstärker mit der Entscheider-Schaltung 7 und diese mit zwei Ausgängen 9, 10 verbunden. Das zum optischen Empfänger gelangende optische Signal wird an dem Eingang 8 von der Photodiode 6 empfangen und in ein elektrisches Mehrstufensignal V gewandelt, das der Entscheider-Schaltung 7 zugeführt wird. Dieses elektrische Mehrstufensignal V wird durch die Entscheider-Schaltung 7 ausgewertet. Die elektrischen Digitalsignale $V_1$, $V_2$ sind an den Eingängen 12, 13 des optischen Senders 1 und an den Ausgängen 9, 10 des optischen Empfängers 2 dargestellt. Das elektrische Mehrstufensignal V ist an der Verbindung zwischen Leistungsaddierer 3 und Halbleiterlaser 4 gezeigt. Bei allen Signalen ist der Verlauf der Amplitude als Funktion der Zeit dargestellt.

In Fig. 2 ist ein Beispiel zur Bildung eines Mehrstufensignals V, das hier ein Vierstufensignal ist, gezeigt, das aus zwei elektrischen Digitalsignalen $V_1$, $V_2$ zusammengesetzt ist. Beide Signale haben die gleiche Bitdauer. Das Digitalsignal $V_1$ hat die Zustände "1, 0, 1, 0, 0, 1, 1, 0" und das Digitalsignal $V_2$ die Zustände "0, 1, 1, 0, 1, 1, 0, 1". Die Amplitude des Digitalsignals $V_2$ ist doppelt so groß wie die des Digitalsignals $V_1$. Es ist ebenfalls die Amplitude als Funktion der Zeit dargestellt.

Durch bitweise Addition der beiden Digitalsignale $V_1$, $V_2$ ergibt sich das Vierstufensignal V, d.h. $V = V_1 + V_2$.

Daß die Amplitude des Digitalsignals $V_2$ doppelt so groß wie die des Digitalsignals $V_1$ ist, kann z. B. dadurch erreicht werden, daß das Digitalsignal $V_1$ bezüglich $V_2$ um den Faktor 2 gedämpft wird. Dies kann durch ein Dämpfungsglied im oder außerhalb des optischen Senders 1 erfolgen. Für die Funktion spielt dies jedoch keine Rolle. Wichtig ist, daß die Amplituden unterschiedlich sind.

Die Bitdauer in dem entstandenen Vierstufensignal V entspricht der Bitdauer der Digitalsignale $V_1$, $V_2$. In diesem Vierstufensignal steckt somit in einer Bitdauer die doppelte Information, nämlich die der beiden Digitalsignale $V_1$, $V_2$. Dadurch ist es möglich, die zu übertragende Informationsmenge um einen Faktor 2 zu erhöhen, was einer Verdoppelung der Bitfolgefrequenz entspricht.

In den folgenden Figuren werden Entscheider-Einheiten verwendet, die aus der Reihenschaltung eines Komparators und eines D-Flip-Flop bestehen. Komparatoren und deren Funktionsweise sind hinreichend bekannt, z. B. aus: U. Tietze, C. Schenk: "Halbleiter-Schaltungstechnik", 8. Auflage, Springer-Verlag 1986, Kapitel 8.5.1, Seite 178. Beim Nulldurchgang der Eingangsspannungsdifferenz nimmt die Ausgangsspannung einen logischen Zustand "1" ein.

In der Anwendung entsprechend der folgenden Figuren wird das Vierstufensignal dem "( + )-Eingang" des Komparators zugeführt und dem "(-)-Eingang" der entsprechende Schwellenwert. Die Ausgangsspannung nimmt hier somit einen logischen Zustand "1" ein, wenn das Vierstufensignal V größer als der jeweilige Schwellenwert ist. Das D-Flip-Flop dient zur Speicherung des jeweiligen logischen Zustands. Die Verarbeitung von Signalen erfolgt synchron zu einem einheitlichen Takt. In den Figuren ist zur Vereinfachung keine Taktzuführung gezeigt.

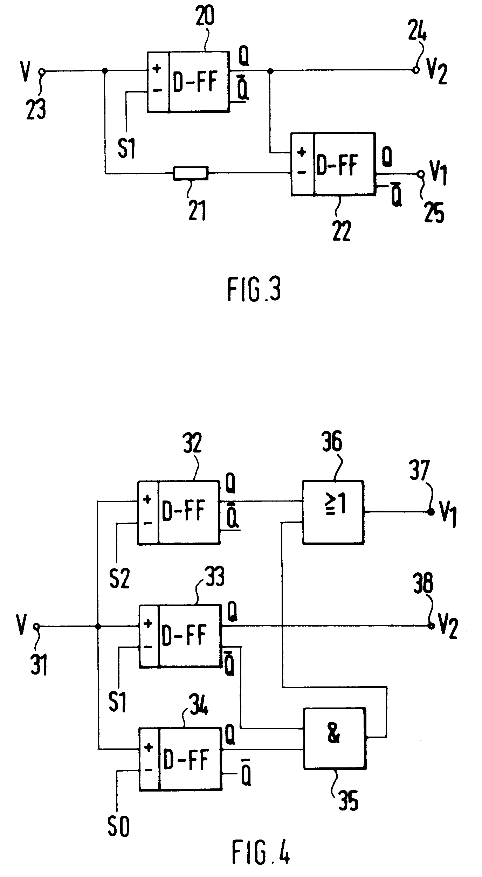

In Fig. 3 ist ein erstes Ausführungsbeispiel einer Entscheider-Schaltung 7 gezeigt. Damit die im optischen Empfänger 2 vorhandene Entscheider-Schaltung 7 aus dem Vierstufensignal V die beiden Digitalsignale $V_1$, $V_2$ zurückgewinnen kann, ist ein Schwellenwert S1 festzulegen. In Fig. 2 liegt dieser in der Mitte des Vierstufensignals V. Die Entscheider-Schaltung 7 gewinnt aus dem Vierstufensignal V das Digitalsignal $V_2$ nach der Maßgabe zurück, daß $V_2$ immer dann den Zustand "1" hat, wenn der Schwellenwert S1 überschritten ist. Das Digitalsignal $V_1$ gewinnt sie entsprechend der Gleichung $V_1 = V - V_2$ zurück.

Die Entscheider-Schaltung 7 hat einen Eingang 23 für das Vierstufensignal V, einen Ausgang 25 für das Digitalsignal $V_1$, einen Ausgang 24 für das Digitalsignal $V_2$, eine erste 20 und zweite Entscheider-Einheit 22 und ein Verzögerungsgatter 21.

Jede Entscheider-Einheit 20, 22 hat einen ersten Ausgang Q und einen zweiten Ausgang $\overline{Q}$, der ein invertierender Ausgang ist. Das Verzögerungsgatter 21 verzögert das Vierstufensignal um die Zeit, die zu seiner Verarbeitung in der ersten Entscheider-Einheit 20 benötigt wird. Dies ist notwendig, da zur Rückgewinnung des Digitalsignals $V_1$ die Differenz $V-V_2$ gebildet wird; $V_2$ muß also zum Zeitpunkt der Differenzbildung bereits zurückgewonnen sein.

Die erste Entscheider-Einheit 20 vergleicht das Vierstufensignal V mit dem Schwellenwert S1. Ist dieser überschritten, tritt an deren erstem Ausgang Q das Digitalsignal $V_2$ aus. Dieser entspricht dem Ausgang 24 der Entscheider-Schaltung 7. Die zweite Entscheider-Einheit 22 ist mit dem ersten Ausgang Q der Entscheider-Einheit 20 und mit dem Verzögerungsgatter 21 verbunden, über das das Vierstufensignal V zugeführt wird. Durch die Entscheider-Einheit 22 erfolgt die bereits erwähnte Differenzbildung $V-V_2$, so daß an deren erstem Ausgang Q, der dem Ausgang 25 der Entscheider-Schaltung 7 entspricht, das Digitalsignal $V_1$ austritt.

Ein zweites Ausführungsbeispiel der Entscheider-Schaltung 7 ist in Fig. 4 gezeigt. Damit die im optischen Empfänger 2 vorhandene Entscheider-Schaltung 7 aus dem Vierstufensignal V die beiden Digitalsignale $V_1$, $V_2$ zurückgewinnen kann, sind

ein erster S0, ein zweiter S1 und ein dritter Schwellenwert S2 festzulegen. In Fig. 2 sind die Schwellenwerte so festgelegt, daß diese jeweils in der Mitte zwischen den einzelnen Stufen liegen.

Sie gewinnt aus dem Vierstufensignal V das Digitalsignal $V_2$, ebenso wie in Fig. 3, nach der Maßgabe zurück, daß $V_2$ immer dann den Zustand "1" hat, wenn der Schwellenwert S1 überschritten ist. Das Digitalsignal $V_1$ gewinnt sie hier dadurch zurück, daß $V_1$ immer dann den Zustand "1" hat, wenn der Schwellenwert S2 überschritten ist oder wenn der Schwellenwert S0 überschritten ist und der Schwellenwert S1 nicht überschritten ist.

Die Entscheider-Schaltung 7 hat einen Eingang 31 für das Vierstufensignal V einen Ausgang 37 für das Digitalsignal $V_1$, einen Ausgang 38 für das Digitalsignal $V_2$, eine erste 32, zweite 33 und dritte Entscheider-Einheit 34, ein "UND"-Gatter 35 und ein "ODER"-Gatter 36.
Die erste Entscheider-Einheit 32 vergleicht das Vierstufensignal V mit dem oberen Schwellenwert S2. Die zweite Entscheider-Einheit 33 vergleicht das Vierstufensignal V mit dem mittleren Schwellenwert S1, und die dritte Entscheider-Einheit 34 vergleicht das Vierstufensignal V mit dem unteren Schwellenwert S0.

Am ersten Ausgang Q der zweiten Entscheider-Einheit 33 tritt das Digitalsignal $V_2$ aus. Der zweite Ausgang $\overline{Q}$ der zweiten Entscheider-Einheit 33 und der erste Ausgang Q der dritten Entscheider-Einheit 34 sind mit dem "UND"-Gatter 35 verbunden, dessen Ausgang mit dem "ODER"-Gatter 36 verbunden ist.

Das "ODER"-Gatter 36 ist außerdem mit dem ersten Ausgang Q der ersten Entscheider-Einheit 32 verbunden, so daß am Ausgang des "ODER"-Gatters 36 das Digitalsignal $V_1$ austritt. Dieser Ausgang entspricht dem Ausgang 37 der Entscheider-Schaltung 7 und der, an dem das Digitalsignal $V_2$ austritt, entspricht dem Ausgang 38.

In diesem Übertragungssystem können auch mehr als zwei elektrische Digitalsignale durch den Leistungsaddierer (3) addiert werden. In diesem Fall kann die Bitfolgefrequenz nochmals erhöht werden.

**Patentansprüche**

1. Optisches Übertragungssystem mit einem optischen Sender (1), der einen elektrisch-optischen Wandler (4) hat, einem Lichtwellenleiter (5) und einem optischen Empfänger (2), der einen optisch-elektrisch Wandler (6) und eine Entscheider-Schaltung (7) hat, **dadurch gekennzeichnet**, daß der optische Sender (1) einen elektrischen Leistungsaddierer (3) hat, der ein erstes ($V_1$) und ein zweites ihm zugeführtes elektrisches Digitalsignal ($V_2$) gleicher Bitdauer und unterschiedlicher Amplitude bitweise addiert, so daß daraus ein elektrisches Mehrstufensignal (V) entsteht, das der elektrisch-optisch Wandler (4) in ein optisches Signal wandelt und über den Lichtwellenleiter (5) zum optischen Empfänger (2) sendet, in dem die Entscheider-Schaltung (7) aus dem durch den optisch-elektrisch Wandler (6) entstandenen elektrischen Mehrstufensignal (V) die Digitalsignale ($V_1$, $V_2$) zurückgewinnt.

2. Optischer Sender (1) mit einem elektrisch-optisch Wandler (4)
**dadurch gekennzeichnet**, daß er einen Leistungsaddierer (3) hat, der ein erstes ($V_1$) und ein zweites ihm zugeführtes elektrisches Digitalsignal ($V_2$) gleicher Bitdauer und unterschiedlicher Amplitude bitweise addiert, so daß daraus ein elektrisches Mehrstufensignal (V) entsteht, das der elektrisch-optisch Wandler (4) in ein optisches Signal wandelt und aussendet.

3. Optisches Übertragungssystem nach Anspruch 1,
dadurch gekennzeichnet, daß das Mehrstufensignal (V) ein Vierstufensignal ist, das aus zwei Digitalsignalen ($V_1$, $V_2$) zusammengesetzt ist.

4. Optisches Übertragungssystem nach Anspruch 3 oder die Entscheider-Schaltung für ein solches Übertragungssystem
dadurch gekennzeichnet, daß in der Entscheider-Schaltung (7) ein unterer (S0), ein mittlerer (S1) und ein oberer Schwellenwert (S2) festgelegt sind, daß sie einen Zustand "1" des zweiten Digitalsignals ($V_2$) detektiert, wenn der mittlere Schwellenwert (S1) überschritten ist und sie einen Zustand "1" des ersten Digitalsignals ($V_1$) detektiert, wenn der obere Schwellenwert (S2) überschritten ist oder wenn der untere Schwellenwert (S0) überschritten ist und der erste Schwellenwert (S1) nicht überschritten ist.

5. Optisches Übertragungssystem oder Entscheider-Schaltung nach Anspruch 4,
dadurch gekennzeichnet, daß die Entscheider-Schaltung (7) eine erste (32), eine zweite (33) und eine dritte Entscheider-Einheit (34), die jeweils einen ersten (Q) und einen zweiten Ausgang ($\overline{Q}$) haben, ein "UND"-Gatter (35) und ein "ODER"-Gatter (36) hat, wobei
- die erste Entscheider-Einheit (32) das Vierstufensignal (V) mit dem oberen Schwellenwert (S2) vergleicht,
- die zweite Entscheider-Einheit (33) das Vierstufensignal (V) mit dem mittleren Schwellenwert (S1) vergleicht und

- die dritte Entscheider-Einheit (34) das Vierstufensignal (V) mit dem unteren Schwellenwert (S0) vergleicht,

so daß am ersten Ausgang (Q) der zweiten Entscheider-Einheit (33) das zweite Digitalsignal ($V_2$) austritt, und daß der zweite Ausgang ($\overline{Q}$) der zweiten Entscheider-Einheit (33) und der erste Ausgang (Q) der dritten Entscheider-Einheit (34) mit dem "UND"-Gatter (35) verbunden sind, dessen Ausgang mit dem "ODER"-Gatter (36) verbunden ist, das außerdem mit dem ersten Ausgang (Q) der ersten Entscheider-Schaltung (32) verbunden ist, so daß am Ausgang des "ODER"-Gatters (36) das erste Digitalsignal ($V_1$) austritt.

6. Optisches Übertragungssystem nach Anspruch 3 oder die Entscheider-Schaltung für ein solches Übertragungssystem, dadurch gekennzeichnet, daß die Entscheider-Schaltung (7) eine erste (20) und zweite Entscheider-Einheit (22), die jeweils einen Ausgang (Q) haben, und ein Verzögerungsgatter (21) hat, wobei die erste Entscheider-Einheit (20) das Vierstufensignal (V) mit einem Schwellenwert (S1) vergleicht, so daß bei Überschreiten dieses Schwellenwertes (S1) an deren Ausgang (Q) das zweite Digitalsignal ($V_2$) austritt, und die zweite Entscheider-Einheit (22) das am Ausgang (Q) der ersten Entscheider-Einheit (20) austretende zweite Digitalsignal ($V_2$) mit dem durch das Verzögerungsgatter (21) verzögerten Vierstufensignal (V) vergleicht, so daß am Ausgang (Q) der zweiten Entscheider-Einheit (22) das erste Digitalsignal ($V_1$) austritt.

7. Optisches Übertragungssystem nach Anspruch 1 oder optischer Sender (1) nach Anspruch 2, dadurch gekennzeichnet, daß der Leistungsaddierer (3) mehr als zwei ihm zugeführte elektrische Digitalsignale gleicher Bitdauer und unterschiedlicher Amplitude bitweise addiert.

8. Optisches Übertragungssystem nach Anspruch 1 oder optischer Sender (1) nach Anspruch 2, dadurch gekennzeichnet, daß das Mehrstufensignal (V) das vom elektrisch-optisch Wandler (4) emittierte Licht in seiner Frequenz oder Amplitude moduliert.

FIG.1

FIG.2

FIG.3

FIG.4

| | EINSCHLÄGIGE DOKUMENTE | | EP 94118819.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 6) |
|---|---|---|---|
| X | DE - A - 3 525 105 (TELEFONBAU UND NORMALZEIT) * Fig. 1,2; Spalte 2, Zeile 35 - Spalte 3, Zeile 34 * | 1-3,8 | H 04 B 10/12 H 04 B 10/04 H 04 L 5/04 |
| A | -- | 4 | |
| Y | DE - A - 4 035 996 (SIEMENS) * Spalte 1, Zeilen 41-54 * -- | 1-3, 8 | |
| Y,D | EP - A - 0 554 736 (ALCATEL SEL) * Fig. 1; Zusammenfassung * ---- | 1-3, 8 | |

| | RECHERCHIERTE SACHGEBIETE (Int. Cl 6) |
|---|---|
| | H 04 B H 04 L |

Der vorliegende Recherchenbericht wurde für alle Patentansprüche erstellt.

| Recherchenort WIEN | Abschlußdatum der Recherche 20-03-1995 | Prüfer DRÖSCHER |
|---|---|---|